(19) Europäisches Patentamt
European Patent Office
Office européen des brevets

(11) **EP 4 654 486 A1**

(12) **EUROPEAN PATENT APPLICATION**
published in accordance with Art. 153(4) EPC

(43) Date of publication:
**26.11.2025 Bulletin 2025/48**

(21) Application number: **24756017.0**

(22) Date of filing: **01.02.2024**

(51) International Patent Classification (IPC):
*H04B 7/0452* (2017.01)

(52) Cooperative Patent Classification (CPC):
**H04B 7/0452; H04B 7/0456; H04L 1/00**

(86) International application number:
**PCT/CN2024/075288**

(87) International publication number:
**WO 2024/169643 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.02.2023 CN 202310182963**

(71) Applicant: **Huawei Technologies Co., Ltd.
Shenzhen, Guangdong 518129 (CN)**

(72) Inventors:
• LI, Ke
  **Shenzhen, Guangdong 518129 (CN)**
• LI, Xiang
  **Shenzhen, Guangdong 518129 (CN)**
• YANG, Yuan
  **Shenzhen, Guangdong 518129 (CN)**

(74) Representative: **Gill Jennings & Every LLP
The Broadgate Tower
20 Primrose Street
London EC2A 2ES (GB)**

(54) **COMMUNICATION METHOD AND APPARATUS**

(57)    This application discloses a communication method and apparatus, and relates to the communication field. The communication method includes: A first terminal receives first information that is from a network device and that indicates modulation order information for data transmission of a second terminal, and receives downlink data based on the modulation order information for the data transmission of the second terminal. The communication method reduces complexity of modulation order detection and decreases power consumption of the first terminal.

```
┌─────────────────┐                    ┌─────────────────┐
│  First terminal │                    │  Network device │
└─────────────────┘                    └─────────────────┘
         │                                      │
         │        S410: First information       │
         │◄─────────────────────────────────────│
         │                                      │
┌─────────────────────────────────┐            │
│ S420: The first terminal receives │            │
│ downlink data based on modulation │            │
│  order information for data       │            │
│ transmission of a second terminal │            │
└─────────────────────────────────┘            │
         │                                      │
```

FIG. 4

**Description**

This application claims priority to Chinese Patent Application No. 202310182963.7, filed with the China National Intellectual Property Administration on February 17, 2023 and entitled "COMMUNICATION METHOD AND APPARATUS", which is incorporated herein by reference in its entirety.

**TECHNICAL FIELD**

This application relates to the communication field, and in particular, to a communication method and apparatus.

**BACKGROUND**

Multi-user multiple-input multiple-output (MU-MIMO) means that a plurality of user equipments (UEs) may multiplex time-frequency resources in a space division manner during uplink and downlink data transmission. Data and demodulation reference signal (DMRS) pilots transmitted by different UEs occupy a same time-frequency domain resource but occupy different DMRS ports, and are separated in space domain through precoding. In a MU-MIMO scenario, due to factors such as a channel measurement error, orthogonality between the UEs is usually very poor, and interference between the UEs is very strong. In this case, a MU-MIMO receiver needs to cancel inter-layer interference between the UEs, and estimate an original signal sent by a base station to the UE.

Currently, a maximum likelihood (ML) receiver is a common MU-MIMO receiver. The ML receiver needs to estimate a modulation order of a paired UE. In this case, an algorithm is highly complex, and UE power consumption is high.

**SUMMARY**

This application provides a communication method and apparatus, to reduce algorithm complexity of an ML receiver and reduce UE power consumption.

To achieve the foregoing objectives, this application uses the following technical solutions.

According to a first aspect, a communication method is provided. The method includes: A first terminal receives first information that is from a network device and that indicates modulation order information for data transmission of a second terminal, and receives downlink data based on the modulation order information for the data transmission of the second terminal.

In the first aspect, the first terminal receives the first information from the network device, and then receives the downlink data based on the modulation order information for the data transmission of the second terminal. In comparison with a current method of performing blind detection on all modulation orders to receive the downlink data, the downlink data is received only based on the modulation order information. This reduces complexity of modulation order detection and decreases power consumption of the first terminal.

In a possible implementation, the quantity of the second terminal is one or more, and the modulation order information indicates a modulation order set of the second terminal.

In this implementation, the network device notifies the first terminal of the modulation order set by using the first information, and the modulation order set may be used by the first terminal to receive the downlink data.

In a possible implementation, the modulation order set includes a modulation order of the second terminal, or the modulation order set includes an offset of a modulation order of the second terminal relative to a modulation order of the first terminal.

In this implementation, the network device notifies, by using the first information, the first terminal of the modulation order set that includes modulation orders of all second terminals, and the modulation order set may be used by the first terminal to receive the downlink data. Alternatively, the modulation order set is set to including the offset of the modulation order of the second terminal relative to the modulation order of the first terminal. The modulation order set may be used by the first terminal to receive the downlink data, and signaling overheads of corresponding first information are low.

In a possible implementation, the modulation order information indicates whether the second terminal and the first terminal have a same modulation order. Alternatively, the modulation order information indicates whether the second terminal and the first terminal have a same modulation order, and whether second terminals occupying a same physical resource block have a same modulation order, where there are a plurality of second terminals. Alternatively, the modulation order information indicates a highest-order modulation scheme in modulation schemes corresponding to the second terminal.

In this implementation, the modulation order information is set to indicating whether the second terminals occupying the same physical resource block have the same modulation order, the modulation order information may be used by the first terminal to receive the downlink data, and signaling overheads of corresponding first information are low. Alternatively, the modulation order information is set to indicating whether the second terminal and the first terminal have the same modulation order, the modulation order information may be used by the first terminal to receive the downlink data, and signaling overheads of corresponding first information are low. Alternatively, the modulation order information is set to indicating whether the second terminal and the first terminal have the same modulation order, and whether the second terminals occupying the same physical resource block have the same modulation order, the modulation order information may be used by the first terminal to receive the downlink data, and signaling overheads of corresponding first information are low. Alternatively, the modulation order information is set to indicating the highest-order modulation scheme in the modulation schemes corresponding to the second terminal, the modulation order information may be used by the first terminal to receive the downlink data, and signaling overheads of corresponding first information are low.

In a possible implementation, there are a plurality of second terminals. The modulation order information indicates that second terminals corresponding to any same physical resource block invoked by the first terminal have a same modulation order. Alternatively, the modulation order information indicates that second terminals corresponding to at least one same physical resource block invoked by the first terminal have different modulation orders. Alternatively, the modulation order information indicates that there is no second terminal corresponding to any same physical resource block invoked by the first terminal.

In a possible implementation, the first terminal and the second terminal multiplex a time-frequency resource in a space division manner.

In a possible implementation, the first information is carried in downlink control information DCI, the first information is carried in radio resource control protocol RRC signaling, or the first information is carried in medium access control control element MAC-CE signaling.

In this implementation, the first information is carried in the DCI. The network device may dynamically send the first information to the first terminal by using the DCI, and the first terminal may determine the modulation order information for the second terminal at any time.

In a possible implementation, the first information is carried in the DCI, and before receiving the first information from the network device, the method further includes: receiving second information that is from the network device and that indicates that the network device has sent the first information.

In this implementation, in a scenario in which the first information is carried in the DCI, the network device sends, to the first terminal, the second information indicating that the network device has sent the first information, to ensure that the first terminal can decode the first information in the DCI.

In a possible implementation, the second information is carried in RRC signaling, or the second information is carried in MAC-CE signaling.

In a possible implementation, the first information includes identification information, and different identification information corresponds to different modulation order information.

In this implementation, content included in the first information is set to the identification information instead of specific modulation order information, so that the first information includes a small amount of data, and signaling overheads needed are low.

In a possible implementation, pilot sequences for sending data to the first terminal and the second terminal by the network device are orthogonal.

According to a second aspect, a communication method is provided, and the method includes:

A network device sends, to a first terminal, first information that indicates modulation order information for data transmission of a second terminal.

In the first aspect, the network device sends the first information to the first terminal, and the first terminal can determine, based on the first information, the modulation order information for the data transmission of the second terminal.

In a possible implementation, the quantity of the second terminal is one or more, and the modulation order information indicates a modulation order set of the second terminal.

In this implementation, the network device notifies the first terminal of the modulation order set by using the first information, and the modulation order set may be used by the first terminal to receive downlink data.

In a possible implementation, the modulation order set includes a modulation order of the second terminal, or the modulation order set includes an offset of a modulation order of the second terminal relative to a modulation order of the first terminal.

In this implementation, the network device notifies, by using the first information, the first terminal of the modulation order set that includes modulation orders of all second terminals, and the modulation order set may be used by the first terminal to receive the downlink data. Alternatively, the modulation order set is set to including the offset of the modulation order of the second terminal relative to the modulation order of the first terminal. The modulation order set may be used by the first terminal to receive the downlink data, and signaling overheads of corresponding first information are low.

In a possible implementation, the modulation order information indicates whether the second terminal and the first terminal have a same modulation order. Alternatively, the modulation order information indicates whether the second terminal and the first terminal have a same modulation order, and whether second terminals occupying a same physical resource block have a same modulation order, where there are a plurality of second terminals. Alternatively, the modulation order information indicates a highest-order modulation scheme in a modulation scheme corresponding to the second terminal.

In this implementation, the modulation order information is set to indicating whether the second terminals occupying the same physical resource block have the same modulation order. The modulation order information may be used by the first terminal to receive the downlink data, and signaling overheads of corresponding first information are low. Alternatively, the modulation order information is set to indicating whether the second terminal and the first terminal have the same modulation order. The modulation order information may be used by the first terminal to receive the downlink data, and signaling overheads of corresponding first information are low. Alternatively, the modulation order information is set to indicating whether the second terminal and the first terminal have the same modulation order, and whether the second terminals occupying the same physical resource block have the same modulation order. The modulation order information may be used by the first terminal to receive the downlink data, and signaling overheads of corresponding first information are low. Alternatively, the modulation order information is set to indicating the highest-order modulation scheme in the modulation scheme corresponding to the second terminal. The modulation order information may be used by the first terminal to receive the downlink data, and signaling overheads of corresponding first information are low.

In a possible implementation, there are a plurality of second terminals. The modulation order information indicates that second terminals corresponding to any same physical resource block invoked by the first terminal have a same modulation order. Alternatively, the modulation order information indicates that second terminals corresponding to at least one same physical resource block invoked by the first terminal have different modulation orders. Alternatively, the modulation order information indicates that there is no second terminal corresponding to any same physical resource block invoked by the first terminal.

In a possible implementation, the first terminal and the second terminal multiplex a time-frequency resource in a space division manner.

In a possible implementation, the first information is carried in downlink control information DCI, the first information is carried in radio resource control protocol RRC signaling, or the first information is carried in medium access control control element MAC-CE signaling.

In a possible implementation, the first information is carried in the DCI, and before the network device sends the first information to the first terminal, the method further includes: The network device sends second information to the first terminal, where the second information indicates that the network device has sent the first information.

In this implementation, in a scenario in which the first information is carried in the DCI, the network device sends, to the first terminal, the second information indicating that the network device has sent the first information, to ensure that the first terminal can decode the first information in the DCI.

In a possible implementation, the second information is carried in RRC signaling, or the second information is carried in MAC-CE signaling.

In a possible implementation, the first information includes identification information, and different identification information corresponds to different modulation order information.

In this implementation, content included in the first information is set to the identification information instead of specific modulation order information, so that the first information includes a small amount of data, and signaling overheads needed are low.

In a possible implementation, pilot sequences for sending data to the first terminal and the second terminal by the network device are orthogonal.

According to a third aspect, a communication apparatus is provided. The communication apparatus may be a chip or a system on chip in a first terminal. The apparatus includes: a transceiver module, used by the first terminal to receive first information that is from a network device and that indicates modulation order information for data transmission of a second terminal; and a processing module, used by the first terminal to receive downlink data based on the modulation order information for the data transmission of the second terminal.

In a possible implementation, the quantity of the second terminal is one or more, and the modulation order information indicates a modulation order set of the second terminal.

In a possible implementation, the modulation order set includes a modulation order of the second terminal, or the modulation order set includes an offset of a modulation order of the second terminal relative to a modulation order of the first terminal.

In a possible implementation, the modulation order information indicates whether the second terminal and the first terminal have a same modulation order. Alternatively, the modulation order information indicates whether the second terminal and the first terminal have a same modulation order, and whether second terminals occupying a same physical resource block have a same modulation order, where there are a plurality of second terminals. Alternatively, the modulation order information indicates a highest-order modulation scheme in a modulation scheme corresponding to the second terminal.

In a possible implementation, there are a plurality of second terminals. The modulation order information indicates that second terminals corresponding to any same physical resource block invoked by the first terminal have a same modulation order. Alternatively, the modulation order information indicates that second terminals corresponding to any same physical resource block invoked by the first terminal have different modulation orders. Alternatively, the modulation order information indicates that there is no second terminal corresponding to any same physical resource block invoked by the first terminal.

In a possible implementation, the first terminal and the second terminal occupy a same time-frequency domain resource.

In a possible implementation, the first information is carried in downlink control information DCI, the first information is carried in radio resource control protocol RRC signaling, or the first information is carried in medium access control control element MAC-CE signaling.

In a possible implementation, the first information is carried in the DCI, and before receiving the first information from the network device, the transceiver module is further used by the first terminal to receive second information that is from the network device and that indicates that the network device has sent the first information.

In a possible implementation, the second information is carried in RRC signaling, or the second information is carried in MAC-CE signaling.

In a possible implementation, pilot sequences for sending data to the first terminal and the second terminal by the network device are orthogonal.

According to a fourth aspect, a communication apparatus is provided. The communication apparatus may be a chip or a system on chip in a network device, and the apparatus includes:

a transceiver module, used by the network device to send, to a first terminal, first information that indicates modulation order information for data transmission of a second terminal.

In a possible implementation, the quantity of the second terminal is one or more, and the modulation order information indicates a modulation order set of the second terminal.

In a possible implementation, the modulation order set includes a modulation order of the second terminal, or the modulation order set includes an offset of a modulation order of the second terminal relative to a modulation order of the first terminal.

In a possible implementation, the modulation order information indicates whether the second terminal and the first terminal have a same modulation order. Alternatively, the modulation order information indicates whether the second terminal and the first terminal have a same modulation order, and whether second terminals occupying a same physical resource block have a same modulation order, where there are a plurality of second terminals. Alternatively, the modulation order information indicates a highest-order modulation scheme in a modulation scheme corresponding to the second terminal.

In a possible implementation, there are a plurality of second terminals. The modulation order information indicates that second terminals corresponding to any same physical resource block invoked by the first terminal have a same modulation order. Alternatively, the modulation order information indicates that second terminals corresponding to any same physical resource block invoked by the first terminal have different modulation orders. Alternatively, the modulation order information indicates that there is no second terminal corresponding to any same physical resource block invoked by the first terminal.

In a possible implementation, the first terminal and the second terminal occupy a same time-frequency domain resource.

In a possible implementation, the first information is carried in downlink control information DCI, the first information is carried in radio resource control protocol RRC signaling, or the first information is carried in medium access control control element MAC-CE signaling.

In a possible implementation, the first information is carried in the DCI, and before receiving the first information from the network device, the transceiver module is further configured to:

receive second information that is from the network device and that indicates that the network device has sent the first information.

In a possible implementation, the second information is carried in RRC signaling, or the second information is carried in MAC-CE signaling.

In a possible implementation, the first information includes identification information, and different identification information corresponds to different modulation order information.

In a possible implementation, pilot sequences for sending data to the first terminal and the second terminal by the network device are orthogonal.

According to a fifth aspect, this application provides a communication apparatus. The communication apparatus includes a processor and a transceiver, and the processor and the transceiver are configured to support the communication apparatus in performing the method according to the first aspect or the second aspect. Further, the communication apparatus may include a memory. The memory stores computer instructions, and the processor may run the computer instructions to perform the method according to the first aspect or the second aspect.

According to a sixth aspect, this application provides a computer-readable storage medium. The computer-readable storage medium stores computer instructions, and when the computer instructions are run, the method according to the first aspect or the second aspect is performed.

According to a seventh aspect, this application provides a computer program product including instructions. When the computer program product runs on a computer, the computer is enabled to perform the method according to the first aspect or the second aspect.

According to an eighth aspect, this application provides a chip. The chip includes a processor and a transceiver, and the processor and the transceiver are configured to support a communication apparatus in performing the method according to the first aspect or the second aspect.

For beneficial effects described in the third aspect to the eighth aspect in this application, correspondingly refer to the analysis of beneficial effects in the first aspect. Details are not described herein again.

**BRIEF DESCRIPTION OF DRAWINGS**

FIG. 1 is a diagram of UE resource allocation in a MU-MIMO scenario according to an embodiment of this application;
FIG. 2 is a diagram of a MU-MIMO scenario according to an embodiment of this application;
FIG. 3 is a diagram 1 of a structure of a communication system according to an embodiment of this application;
FIG. 4 is a schematic flowchart 1 of a communication method according to an embodiment of this application;
FIG. 5 is a schematic flowchart 2 of a communication method according to an embodiment of this application;
FIG. 6 is a diagram 1 of a structure of a communication apparatus according to an embodiment of this application;
FIG. 7 is a diagram 2 of a structure of a communication apparatus according to an embodiment of this application; and
FIG. 8 is a diagram 2 of a structure of a communication system according to an embodiment of this application.

**DESCRIPTION OF EMBODIMENTS**

A network architecture and a service scenario described in embodiments of this application are intended to describe technical solutions in embodiments of this application more clearly, and do not constitute a limitation on the technical solutions provided in embodiments of this application. A person of ordinary skill in the art may know that: With evolution of the network architecture and emergence of new service scenarios, the technical solutions provided in embodiments of this application are also applicable to similar technical problems.

Before embodiments of this application are described, some terms in embodiments of this application are explained.

Quadrature amplitude modulation (quadrature amplitude modulation, QAM) and modulation and coding scheme table (modulation and coding scheme table, MCS Table):

The QAM is a modulation scheme used for a data channel in a 5th generation (5th generation, 5G) mobile communication system, and is a modulation scheme in which bit information is modulated on two carriers with a same frequency and orthogonal phases for amplitude modulation. Two channels of modulated signals are superimposed and then sent. Modulated bit information may be represented as a complex number, that is, a bit stream is mapped as a complex number symbol stream. Modulation schemes used for the 5G data channel are QPSK, 16QAM, 64QAM, 256QAM, and 1024QAM. Corresponding modulation orders are respectively 2, 4, 6, 8, and 10. In this example, 10 corresponding to 1024QAM is a highest-order modulation order.

A communication method provided in embodiments of this application may be implemented by using modulation schemes used for data channels specified in various standards. In the technical solutions provided in embodiments of this application, an example in which the modulation scheme used for the 5G data channel is QAM is used to describe the technical solutions provided in embodiments of this application.

A base station usually statically configures a type of the MCS table by using a higher layer, and then indicates an MCS index in the MCS table by using downlink control information (downlink control information, DCI). An MCS includes a modulation order and a code rate.

The MCS table may be understood as a set of a combination of a modulation order and a code rate for transmitting data by the base station to a UE. Four types of MCS tables are defined in 3GPP. Modulation schemes in MCS Table 1 and MCS Table 3 include QPSK, 16QAM, and 64QAM. Modulation schemes in MCS Table 2 include QPSK, 16QAM, 64QAM, and 256QAM. Modulation schemes included in MCS Table 4 are QPSK, 16QAM, 64QAM, and 1024QAM.

MU-MIMO:

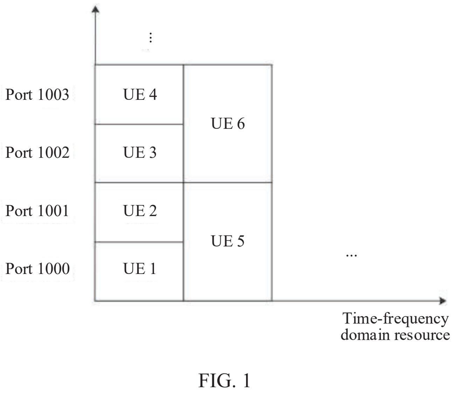

MU-MIMO means that a plurality of users may multiplex time-frequency resources in a space division manner during uplink and downlink data transmission. Data and DMRS pilots whose transmission is performed by different UEs occupy a same time-frequency domain resource but occupy different DMRS ports, and are separated in space domain through precoding. As shown in FIG. 1, a UE 1, a UE 2, a UE 3, and a UE 4 occupy a same time-frequency domain resource, but are distinguished by using different ports, and numbers of allocated DMRS ports are respectively a port 1000, a port 1001, a port 1002, and a port 1003. A UE 5 and a UE 6 occupy a same time-frequency domain resource, but are distinguished by using different port numbers, and numbers of allocated ports are respectively ports 1000 and 1001, and ports 1002 and 1003. A process of selecting a plurality of users to multiplex time-frequency resources in a space division manner is referred to as pairing. Reference is made to the following rules during user pairing.

When signal quality of UEs is good, for example, a signal to interference plus noise ratio (signal to interference plus noise ratio, SINR) is high, signal fluctuation is small, and channel correlation between the UEs is weak, interference between the UEs can be effectively cancelled, and the UEs are suitable for MU-MIMO pairing. In this case, in the MU-MIMO, good channel conditions can be fully utilized to add extra system capacity for a cell.

When signal quality of UEs is poor (for example, an SINR is low or signal fluctuation is large) or channel correlation between the UEs is strong, interference between the UEs cannot be effectively cancelled. In this case, the MU-MIMO may cause a decrease in a system throughput. In this case, a network avoids selecting users with poor signal quality or strong channel correlation for pairing.

MU-MIMO mathematical model:

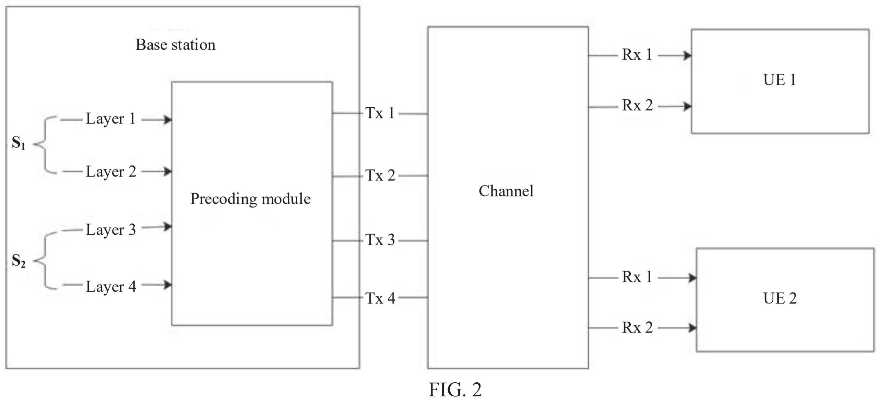

As shown in FIG. 2, it is assumed that there are two UEs that are paired with each other, the UEs each have two receive antennas, a base station has four transmit antennas, and each UE is separately mapped to two layers (two DMRS ports). $s_1$ and $s_2$ are respectively a QAM symbol vector sent to a UE 1 and a QAM symbol vector sent to a UE 2, and sizes of the QAM symbol vectors are 2×1.

A precoding module maps a QAM symbol of each layer to the transmit antenna. In this case, a signal of the transmit antenna is:

$$W_1 s_1 + W_2 s_2$$

$W_1$ and $W_2$ are respectively a precoding matrix of the UE 1 and a precoding matrix of the UE 2, and sizes of the precoding matrices each are 4×2.

A modulated signal passes through a MIMO channel, and a channel matrix may be written as: $H = \begin{bmatrix} H_1 \\ H_2 \end{bmatrix}$. A size of $H$ is 4×4. $H_1$ is a coefficient of a channel from the transmit antenna to the receive antenna of the UE 1, and a size of the coefficient is 2×4. $H_2$ is a coefficient of a channel from the transmit antenna to the receive antenna of the UE 2, and a size of the coefficient is 4×2. In this case, a receive end may be written as:

$$\begin{bmatrix} y_1 \\ y_2 \end{bmatrix} = \begin{bmatrix} H_1 \\ H_2 \end{bmatrix} (W_1 s_1 + W_2 s_2) + \begin{bmatrix} n_1 \\ n_2 \end{bmatrix}$$

$y_1$ and $y_2$ are respectively a signal at a receive antenna end of the UE 1 and a signal at a receive antenna end of the UE 2, and sizes of the signals each are 2×1. $n_1$ and $n_2$ each are white Gaussian noise.

For the UE 1:

$$y_1 = H_1 W_1 s_1 + H_1 W_2 s_2 + n1$$

$H_1 W_2 s_2$ may be considered as interference from the UE 2 to the UE 1. A UE on which interference cancellation needs to be performed (that is, the UE 1) is referred to as a serving UE, and a UE (the UE 2) that causes interference is referred to as a paired UE or an interfering UE. During precoding selection, a network needs to ensure that $H_1 W_1$ is orthogonal to $H_1 W_2$ to the greatest extent, to reduce the interference from the UE 2 to the UE 1, and also needs to ensure that $H_2 W_1$ is orthogonal to $H_2 W_2$ to the greatest extent, to reduce the interference from the UE 2 to the UE 1. However, in practice, due to a channel measurement error and some other factors, orthogonality between paired UEs is poor, resulting in strong interference. In this case, a MU-MIMO receiver is needed for cancelling inter-layer interference.

A quantity of DMRS ports is in one-to-one correspondence with a quantity of spatial multiplexing layers. That is, a quantity of ports occupied by a UE is the same as a quantity of layers to which the UE is mapped. For a UE, a layer at which the UE is scheduled is referred to as a service layer, and a layer at which another UE paired with the UE is scheduled is referred to as an interference layer. This is because, for the service layer, arrival, at the receive end, of data mapped to another layer or another DMRS port causes interference to arrival, at the receive end, of data mapped to the service layer. One UE may be scheduled at one or more interference layers. For example, as shown in FIG. 2, for the UE 1, a layer 1 and a layer 2 are service layers, and a layer 3 and a layer 4 are interference layers. For the UE 2, the layer 3 and the layer 4 are service layers, and the layer 1 and the layer 2 are interference layers. The layer 1, the layer 2, the layer 3, and the layer 4 each correspond to one DMRS port.

MU-MIMO receiver:

For ease of understanding, it is assumed that there are two UEs that are paired with each other. An input/output model of MU-MIMO may be written as follows:

$$y = HW_S x_S + HW_I x_I + n$$

$H$ is a coefficient of a channel from a transmit antenna port of a base station to a receive antenna port of a serving UE, and a dimension of the coefficient is $N_R N_T$. $N_R$ is a quantity of receive antennas of the serving UE, and $N_T$ is a quantity of transmit antennas at the base station end. $W_S$ and $W_I$ are respectively a precoding matrix of the serving UE and a precoding matrix of an interfering UE, and dimensions of the precoding matrices are respectively $N_T L_S$ and $N_T L_I$. $L_S$ and $L_I$ are respectively a quantity of layers at which the serving UE is scheduled and a quantity of layers at which the paired UE is scheduled. $x_S$ and $x_I$ are respectively a transmit vector of the serving UE and a transmit vector of the paired UE, and dimensions of the transmit vectors are respectively $L_S * 1$ and $L_I * 1$. n is white Gaussian noise, and a dimension of the white Gaussian noise is $N_R * 1$. y is a receive signal vector at the serving UE end, and a length of the vector is the quantity of receive antennas.

The receiver estimates a transmit signal by using a channel estimation value output by a channel estimation module and the receive signal, so that an SINR at a receive end is as high as possible, and the SINR is input to a demodulation module to obtain a bit-level estimate.

Receivers may be classified into linear receivers and non-linear receivers. Although the linear receiver has a simple implementation structure, performance of the linear receiver is limited when antenna correlation is strong or there are many interference layers. Therefore, the non-linear receiver is a mainly used receiver in a MU-MIMO scenario.

A most common non-linear receiver is an ML receiver. An ML principle is an optimal method of the MIMO receiver. The principle is searching all transmit signal vectors to find one most possible transmit signal vector. A formula may be represented as follows:

$$\hat{x} = \underset{x_S \in C_S, x_I \in C_I}{\mathrm{argmin}} \left( \|y - HW_S x_S - HW_I x_I\|^2 \right)$$

$C_S$ is a constellation diagram set of a service layer, $C_I$ is a constellation diagram set of an interference layer, and $\hat{x}$ is a joint estimation result of signals sent to the serving UE and the interfering UE. A UE may know a modulation order of the service layer by decoding DCI scheduled to the UE, but does not know a modulation order of the interference layer. Therefore, the modulation order of the interference layer needs to be estimated. The UE knows the constellation diagram set provided that the UE knows the modulation order.

The following briefly describes ML: ML is a statistical method, and is used to obtain a parameter of a correlation probability density function of a sample set. An explicit probability model is used in ML and ML aims to search for a phylogenetic tree that can generate observation data with a high probability. The ML is a representative of a type of phylogenetic tree reconstruction method completely based on statistics.

A probability distribution D is given. It is assumed that a probability density function of the probability distribution D is $f_D$ and there is a distribution parameter θ. A sample $X_1, X_1, ... , X_n$ having n values may be extracted from the distribution, and then the sample data is used to estimate θ. In maximum likelihood estimation, searching for a most possible value of θ (in other words, searching for a value from all possible values of θ, to maximize a "possibility" of the sample) is performed.

To implement a maximum likelihood estimation method mathematically, the possibility is first defined:

$$lik(\theta) = f_D(X_1, X_1, ..., X_n | \theta)$$

Among all the values of θ, the function is maximized. The value that causes the possibility to be maximized is referred to as a maximum likelihood estimate of θ.

For the ML receiver, blind detection of the modulation order of the interference layer is a key part. The modulation order blind detection also employs the maximum likelihood estimation method. For example, in a scenario of MCS Table 2, the UE needs to traverse modulation orders {2, 4, 6, 8} of all interference layers, calculate corresponding likelihood probabilities, and obtain a modulation order combination corresponding to a maximum likelihood probability, that is, a modulation order of each layer. It is assumed that there are N interference layers, corresponding modulation orders are respectively $Q_1$, $Q_2$, ..., and $Q_N$, and are to-be-estimated parameters, and there are K observation samples $y_1$, $y_2$, ..., $y_K$. A maximum likelihood estimation formula may be written as:

$$\hat{Q}_1, \hat{Q}_2, \dots, \hat{Q}_N = \underset{Q_1,Q_2,\dots,Q_N \in 2,4,6,8}{argmax} \; P(y_1, y_2, \dots, y_K | Q_1, Q_2, \dots, Q_N)$$

The modulation order of each layer has four possibilities: {2, 4, 6, 8}. The UE needs to traverse $4^N$ possibilities. N is a quantity of interference layers, and may also be understood as a quantity of paired UEs.

It can be learned that, because the modulation order of each layer is independently scheduled, when a quantity of interference layers, in other words, a quantity of paired UEs increases, the UE needs to traverse more possible cases. It is assumed that three interfering UEs are respectively allocated to three interference layers, and $C_n$ is a candidate modulation constellation $C_n \in \{QPSK,\ 16QAM,\ 64QAM,\ 256QAM\}$. In this case, the serving UE needs to traverse 4*4*4=64 possible combinations, and select a combination with a maximum likelihood probability as an estimation value of the modulation order of each layer. This greatly increases blind detection complexity of the serving UE. However, in an actual deployment scenario, there is a very low probability that modulation orders of all paired UEs include all four modulation orders. That is, many estimations of the serving UE are unnecessary.

In conclusion, complexity of estimating the modulation order by the serving UE is high, and occupied power consumption of a first user equipment is high.

To resolve the foregoing technical problems, embodiments of this application provide a communication method. In the communication method, a network device notifies, by using first signaling, a serving user equipment (also referred to as a first user equipment) of modulation order information for data transmission of a paired user equipment (also referred to as a second user equipment). In this way, the serving user equipment may estimate a modulation order of an interference layer based on the modulation order information, to receive downlink data, and does not need to traverse all possibilities of a to-be-estimated parameter during estimation of the modulation order of the interference layer. This reduces complexity of modulation order detection of the interference layer and reduce power consumption of the serving user equipment.

The following describes the method provided in embodiments of this application with reference to the accompanying drawings.

The communication method provided in embodiments of this application may be applied to various communication systems, for example, a long term evolution (long term evolution, LTE) system, a 5th generation (5th generation, 5G) mobile communication system, a wireless fidelity (wireless fidelity, Wi-Fi) system, a future communication system, or a system integrating a plurality of communication systems. This is not limited in embodiments of this application. 5G may also be referred to as new radio (new radio, NR).

The communication method provided in embodiments of this application may be applied to various communication scenarios, for example, may be applied to one or more of the following communication scenarios: enhanced mobile broadband (enhanced mobile broadband, eMBB), ultra-reliable low-latency communication (ultra-reliable low-latency communication, URLLC), machine-type communication (machine-type communication, MTC), massive machine-type communications (massive machine-type communications, mMTC), device to device (device to device, D2D), vehicle to everything (vehicle to everything, V2X), vehicle to vehicle (vehicle to vehicle, V2V), and an internet of things (internet of things, IoT).

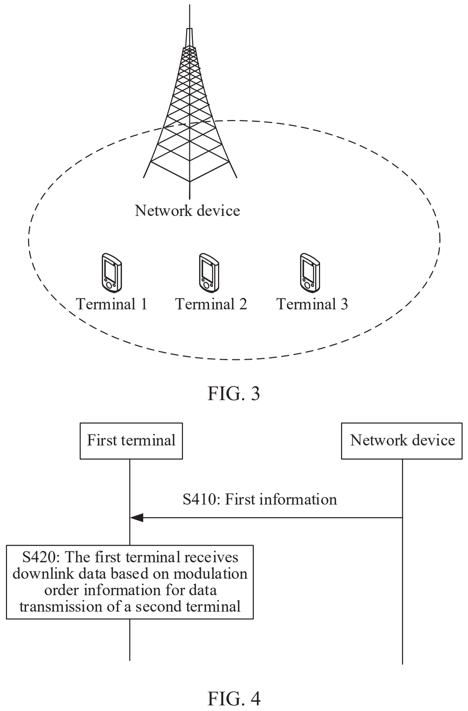

The following uses a communication system shown in FIG. 3 as an example to describe the communication method provided in embodiments of this application.

FIG. 3 is a diagram 1 of a structure of a communication system according to an embodiment of this application. As shown in FIG. 3, the communication system may include:

a network device and a plurality of terminals (a terminal 1, a terminal 2, and a terminal 3), where the plurality of terminals multiplex a time-frequency resource in a space division manner, and data and DMRS pilots whose transmission is performed by different terminals occupy a same time-frequency domain resource but occupy different DMRS ports, and are separated in space domain through precoding.

It should be noted that FIG. 3 is merely an example framework diagram, and a quantity of nodes included in FIG. 3 and a status of the terminal are not limited. In addition to the functional nodes shown in FIG. 3, other nodes such as a core network device, a gateway device, and an application server may be further included. This is not limited. The network device and the core network device communicate with each other in a wired or wireless manner, for example, through a next generation (next generation, NG) interface.

The network device is mainly configured to implement at least one of functions of the terminal, such as resource scheduling, radio resource management, and radio resource control. Specifically, the network device may include any node of a base station, a wireless access point, a transmission and reception point (transmission receive point, TRP), a transmission point (transmission point, TP), and another access node. In embodiments of this application, an apparatus configured to implement a function of the network device may be a network device, or may be an apparatus, for example, a chip system, that can support the network device in implementing the function. The apparatus may be installed in the network device or used in combination with the network device. In the technical solutions provided in embodiments of this application, an example in which the apparatus configured to implement the function of the network device is a network device is used to describe the technical solutions provided in embodiments of this application.

The terminal (terminal equipment) may be a UE, a mobile station (mobile station, MS), a mobile terminal (mobile terminal, MT), or the like. Specifically, the terminal may be a mobile phone (mobile phone), a tablet computer, or a computer with a wireless transceiver function, or may be a virtual reality (virtual reality, VR) terminal, an augmented reality (augmented reality, AR) terminal, a wireless terminal in industrial control, a wireless terminal in self-driving, a wireless terminal in telemedicine, a wireless terminal in a smart grid, a wireless terminal in a smart city (smart city), a smart home, a vehicle-mounted terminal, or the like. In embodiments of this application, an apparatus configured to implement a function of the terminal may be a terminal, or may be an apparatus, for example, a chip system, that can support the terminal in implementing the function. The apparatus may be installed in the terminal or used in combination with the terminal. The following uses an example in which the apparatus configured to implement the function of the terminal is a UE to describe the method provided in embodiments of this application by.

FIG. 4 is a schematic flowchart 1 of a communication method according to an embodiment of this application. As shown in FIG. 4, the method may include the following steps.

S410: A network device sends first information to a first terminal, and correspondingly, the first terminal receives the first information from the network device.

The first information indicates modulation order information for data transmission of a second terminal. The network device is communicatively connected to the first terminal and the second terminal, and can perform data transmission with the first terminal or the second terminal, for example, transmission of the first information. The first terminal may be a serving UE, and the second terminal may be a paired UE. There may be one or more second terminals. The first information may include identification information, and different identification information corresponds to different modulation order information. The first information may be carried in any one of the following information: downlink control information DCI, radio resource control protocol (radio resource control, RRC) signaling, or medium access control control element (medium access control control element, MAC-CE) signaling.

For ease of understanding, a communication scenario to which the network device, the first terminal, and the second terminal may belong is described.

In a MU-MIMO scenario, the first terminal and the second terminal occupy a same time-frequency domain resource, and occupy different demodulation reference signal ports. If a center frequency, a bandwidth, sending start time, and sending end time of a signal sent by a base station to the first terminal are the same as those of a signal sent by the base station to the second terminal, it is considered that the first terminal and the second terminal occupy the same time-frequency domain resource. If pilot sequences for sending data to the first terminal and the second terminal by the base station are orthogonal, it is considered that the occupied demodulation reference signal ports are different.

In another possible communication scenario, the first terminal and the second terminal occupy a same time-frequency domain resource, and occupy a same demodulation reference signal port. Generally, the communication scenario is a cell edge communication scenario. In this communication scenario, the first terminal and the second terminal communicate with different network devices, and two network devices respectively perform resource configuration for the first terminal and the second terminal independently. Signals sent by the two network devices to the first terminal and the second terminal interfere with each other. The two network devices may communicate with each other via a core network, to notify each other of resource configuration information of the terminals served by the two network devices, so as to separately generate respective first information, and send the first information to the terminals that respectively communicate with the two network devices.

S420: The first terminal receives downlink data based on the modulation order information for the data transmission of the second terminal.

When receiving the downlink data, the first terminal first needs to determine a modulation order of an interference layer, and then receives the downlink data based on the determined modulation order of the interference layer. During determining of the modulation order of the interference layer, maximum likelihood estimation is performed based on the modulation order information for the data transmission of the second terminal, to determine the modulation order of the interference layer, and a signal sent by the network device to the first terminal is finally estimated by using the determined modulation order of the interference layer. The first terminal may receive the downlink data based on the estimated signal.

In this embodiment of this application, the first terminal receives the first information from the network device, and then receives the downlink data based on the modulation order information for the data transmission of the second terminal. In comparison with a current method of performing blind detection on all modulation orders to receive the downlink data, detection is performed only on a modulation order in a range of the modulation order information for the data transmission of the second terminal, to receive the downlink data. This reduces complexity of modulation order detection and decreases power consumption of the first terminal.

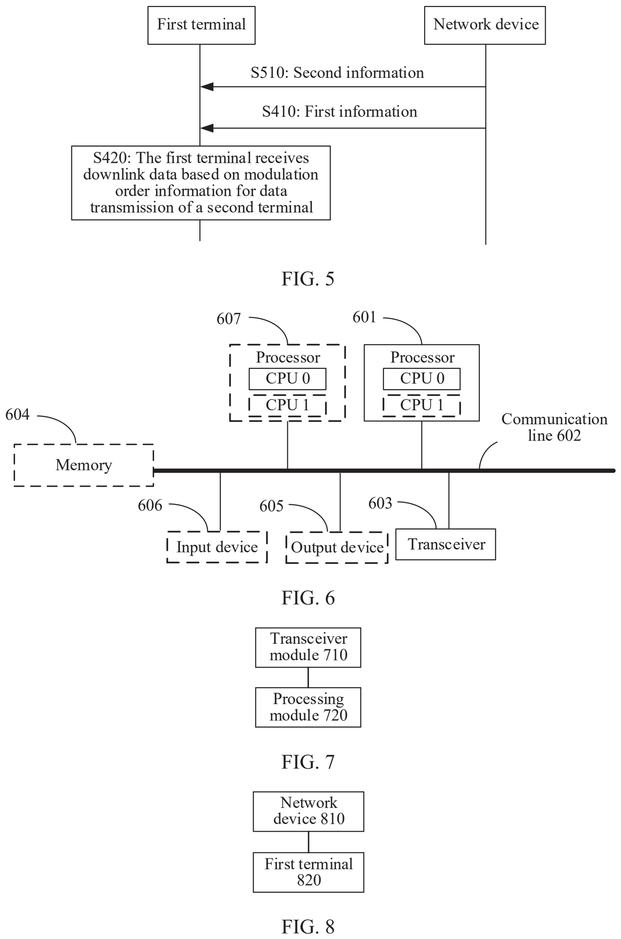

In an embodiment, the first information is carried in the DCI. Before the first information from the network device is received, as shown in FIG. 5, the method may further include the following step. FIG. 5 is a schematic flowchart 2 of a communication method according to an embodiment of this application.

S510: The network device sends second information to the first terminal, and correspondingly, the first terminal receives the second information from the network device.

The second information indicates that the network device has sent the first information. The second information may be carried in RRC signaling or MAC-CE signaling. Considering that, after receiving the first information carried in the DCI, the first terminal needs to decode the DCI to obtain the first information, and needs to clearly know a DCI length, for decoding the DCI, the first terminal may preset DCI lengths corresponding to various scenarios. The network device sends the second information to the first terminal, so that after receiving the second information, the first terminal may determine a scenario, where the scenario is that the first information needs to be received. In this case, the first terminal may decode the first information in the DCI based on a DCI length corresponding to the scenario.

In this embodiment of this application, the first information is carried in the DCI. With the help of the DCI, the network device may send the first information to the first terminal based on a slot. The first terminal may determine the modulation order information for the second terminal at any time, and the network device sends, to the first terminal, the second information indicating that the network device has sent the first information, to ensure that the first terminal can decode the first information in the DCI.

In an embodiment, the modulation order information indicates a modulation order set of the second terminal.

The modulation order set may include a modulation order of the second terminal, or may further include an offset of the modulation order of the second terminal relative to a modulation order of the first terminal. The following first describes a case in which the modulation order set includes the modulation order of the second terminal.

To reduce signaling overheads, a data format of the first information may be set to a bit field, and a quantity of bits of the bit field may be set based on all possible items of the modulation order in a communication scenario. The first terminal may preset mapping information between different arrays in the bit field and different modulation order sets. In this way, after receiving the first information, the first terminal may determine a corresponding modulation order set based on the first information. For example, in a communication scenario, all possible items of the modulation order include four types: 2, 4, 6, and 8. In this case, the bit field of the first information may be set to 4 bits, and the mapping information between different arrays in the first information and different modulation order sets may be shown in Table 1.

Table 1

| First information | Modulation scheme of a second terminal | Modulation order of the second terminal |
|---|---|---|
| 0000 | No second terminal | No second terminal |
| 0001 | {QPSK} | {2} |
| 0010 | {16QAM} | {4} |
| 0011 | {64QAM} | {6} |
| 0100 | {256QAM} | {8} |
| 0101 | {QPSK, 16QAM} | {2, 4} |
| 0110 | {QPSK, 64QAM} | {2,6} |
| 0111 | {QPSK, 256QAM} | {2,8} |
| 1000 | {16QAM, 64QAM} | {4,6} |
| 1001 | {16QAM, 256QAM} | {4, 8} |
| 1010 | {64QAM, 256QAM} | {6, 8} |
| 1011 | {16QAM, 64QAM, 256QAM} | {4, 6, 8} |
| 1100 | {QPSK, 64QAM, 256QAM} | {2, 6, 8} |
| 1101 | {QPSK, 16QAM, 256QAM} | {2, 4, 8} |
| 1110 | {QPSK, 16QAM, 64QAM} | {2, 4, 6} |
| 1111 | {QPSK, 16QAM, 64QAM, 256QAM} | {2, 4, 6, 8} |

In this example, after receiving the first information, the first terminal may determine, based on the mapping information in the example in Table 1, a modulation order set on which detection needs to be performed during maximum likelihood estimation, and traverse a modulation order in the modulation order set to perform maximum likelihood estimation. In this example, in a case in which the first information is 0000, indicating that there is no second terminal, the first terminal may turn off a maximum likelihood receiver. This reduces power consumption of the first terminal caused by running of the maximum likelihood receiver. In a case in which the first information is 0001, 0010, 0011, or 0100, because there is only one modulation order, modulation order detection does not need to be performed, and the downlink data is directly received based on the modulation order corresponding to the first information. However, in a case in which the first information is 1111, because the modulation order of the second terminal covers all possible modulation orders, similar to blind detection, detection needs to be performed on all the modulation orders to receive the downlink data. In addition to the foregoing six cases of the first information, in all remaining possible cases of the first information, when the first terminal performs maximum likelihood estimation of the modulation order of the interference layer, in comparison with estimating the modulation order through blind detection, possibilities of a to-be-estimated parameter that need to be traversed are reduced from $4^{N_{Layer}}$ possibilities to $N^{N_{Layer}}$ possibilities. $N_{Layer}$ is a quantity of interference layers, and $N$ is a quantity of elements in the modulation order set corresponding to the first information. This reduces power consumption of performing maximum likelihood estimation by the first terminal.

In another example, all possible items of the modulation order include five types: {2, 4, 6, 8, 10}. In this case, the bit field of the first information may be set to 5 bits, and the mapping information between different arrays in the bit field and different modulation order sets may be shown in Table 2.

Table 2

| First information | Modulation scheme of a second terminal | Modulation order of the second terminal |
|---|---|---|
| 00000 | No second terminal | No second terminal |
| 00001 | {QPSK} | {2} |
| 00010 | {16QAM} | {4} |
| 00011 | {64QAM} | {6} |
| 00100 | {256QAM} | {8} |
| 00101 | {1024QAM} | {10} |
| 00110 | {QPSK, 16QAM} | {2,4} |
| 00111 | {QPSK, 64QAM} | {2,6} |
| 01000 | {QPSK, 256QAM} | {2, 8} |
| 01001 | {QPSK, 1024QAM} | {2, 10} |
| 01010 | {16QAM, 64QAM} | {4,6} |
| 01011 | {16QAM, 256QAM} | {4, 8} |
| 01100 | {16QAM, 1024QAM} | {4, 10} |
| 01101 | {64QAM, 256QAM} | {6, 8} |
| 01110 | {64QAM, 1024QAM} | {6, 10} |
| 01111 | {256QAM, 1024QAM} | {8, 10} |
| 10000 | {64QAM, 256QAM, 1024QAM} | {6, 8, 10} |
| 10001 | {16QAM, 256QAM, 1024QAM} | {4, 8, 10} |
| 10010 | {16QAM, 64QAM, 1024QAM} | {4, 6, 10} |
| 10011 | {16QAM, 64QAM, 1024QAM} | {4, 6, 10} |
| 10100 | {16QAM, 64QAM, 256QAM} | {4, 6, 8} |
| 10101 | {QPSK, 256QAM, 1024QAM} | {2, 8, 10} |
| 10110 | {QPSK, 64QAM, 1024QAM} | {2, 6, 10} |
| 10111 | {QPSK, 64QAM, 256QAM} | {2, 6, 8} |
| 11000 | {QPSK, 16QAM, 1024QAM} | {2, 4, 10} |

(continued)

| First information | Modulation scheme of a second terminal | Modulation order of the second terminal |
|---|---|---|
| 11001 | {QPSK, 16QAM, 256QAM} | {2, 4, 8} |
| 11010 | {QPSK, 16QAM, 64QAM, 256QAM} | {2, 4, 6,8} |
| 11011 | {QPSK, 16QAM, 64QAM, 1024QAM} | {2, 4, 6,10} |
| 11100 | {QPSK, 16QAM, 256QAM, 1024QAM} | {2, 4, 8,10} |
| 11101 | {QPSK, 64QAM, 256QAM, 1024QAM} | {2, 6, 8, 10} |
| 11110 | {16QAM, 64QAM, 256QAM, 1024QAM} | {4, 6, 8, 10} |
| 11111 | {QPSK, 16QAM, 64QAM, 256QAM, 1024QAM} | {2, 4, 6, 8, 10} |

In this example, after receiving the first information, the first terminal may determine, based on the mapping information in the example in Table 2, a modulation order set on which detection needs to be performed during maximum likelihood estimation, and traverse possible modulation order combinations in the modulation order set to perform maximum likelihood estimation. To be specific, in a case in which the first information is 00000, indicating that there is no second terminal, the first terminal may turn off a maximum likelihood receiver. This reduces power consumption of the first terminal caused by running of the maximum likelihood receiver. In a case in which the first information is 00001, 00010, 00011, 00100, or 00101, because there is only one modulation order, modulation order detection does not need to be performed, and the downlink data is directly received based on the modulation order corresponding to the first information. However, in a case in which the first information is 11111, because the modulation order of the second terminal covers all possible modulation orders, similar to blind detection, detection needs to be performed on all the modulation orders to receive the downlink data. In addition to the foregoing seven cases of the first information, in all remaining possible cases of the first information, when the first terminal performs maximum likelihood estimation of the modulation order of the interference layer, in comparison with estimating the modulation order through blind detection, possibilities of a to-be-estimated parameter that need to be traversed are reduced from $4^{N_{Layer}}$ possibilities to $N^{N_{Layer}}$ possibilities. $N_{Layer}$ is a quantity of interference layers, and $N$ is a quantity of elements in the modulation order set corresponding to the first information. This reduces power consumption of performing maximum likelihood estimation by the first terminal.

In this embodiment, there may be one or more second terminals. When there is one second terminal, the modulation order set is a modulation order corresponding to the unique second terminal. When there are a plurality of second terminals, the modulation order set includes modulation orders corresponding to all the second terminals. For example, there are three second terminals, and modulation orders respectively corresponding to the three second terminals are 2, 4, and 2. In this case, the modulation order set is {2, 4}. In another example, there are still three second terminals, and modulation orders respectively corresponding to the three second terminals are 2, 4, and 6. In this case, the modulation order set is {2, 4, 6}.

In another example, to reduce signaling overheads of first signaling, in comparison with the mapping information between the first information and the modulation order set shown in Table 1 or Table 2, the mapping information between the first information and the modulation order set is simplified. Specifically, modulation order sets that meet a preset condition are uniformly represented by using same first signaling. For example, the mapping information between the first information and the modulation order of the second terminal may be shown in Table 3.

Table 3

| First information | Modulation scheme of a second terminal | Modulation order of the second terminal |
|---|---|---|
| 000 | No second terminal | No second terminal |
| 001 | {QPSK} | {2} |
| 010 | {16QAM} | {4} |
| 011 | {64QAM} | {6} |
| 100 | {256QAM} | {8} |
| 101 | {QPSK, 16QAM} | {2, 4} |
| 110 | {QPSK, 64QAM} | {2,6} |
| 111 | Others | Others |

As shown in Table 3, for a case other than a case in which the first information is 111, refer to corresponding descriptions of the corresponding modulation order of the second terminal in Table 1. Details are not described again. However, in a case in which the first information is 111, after receiving the first information, the first terminal performs blind detection on the modulation order of the second terminal. A modulation order of the second terminal corresponding to the case in which the first information is 111 may be determined based on a preset condition. For example, the preset condition may be that the modulation order of the second terminal includes a possible highest modulation order in the communication scenario. For MCS Table 2, if the modulation order of the second terminal includes 8, it is considered that the preset condition is met. For MCS Table 4, if the modulation order of the second terminal includes 10, it is considered that the preset condition is met. In another example, the preset condition may alternatively be that the modulation order of the second terminal includes at least three elements, for example, {2, 4, 6} or {4, 6, 8}. In another example, the preset condition may alternatively be that the modulation order of the second terminal includes at least two elements, and includes a possible highest modulation order in the communication scenario.

For the cases of the modulation order of the second terminal determined in the foregoing several examples of the preset condition, refer to the plurality of modulation orders corresponding to the first information 0111 to 1111 in Table 1. In the several cases, although modulation orders on which detection is performed based on the first information shown in Table 1 are fewer than those in blind detection, because the modulation order indicated by the first information is complex, a degree of detection reduction is not high, and a probability that the several cases occur is low. As shown in Table 3, the modulation orders of the second terminal corresponding to these cases uniformly correspond to one type of first information, to notify the first terminal to directly perform blind detection. In comparison with the setting of the first information in the MCS Table 2 scenario shown in Table 1, a size of the first information may be reduced from 4 bits to 3 bits. In comparison with the setting of the first information in the MCS Table 4 scenario shown in Table 2, the size of the first information may be reduced from 5 bits to 3 bits.

The foregoing describes the case in which the modulation order set includes the modulation order of the second terminal. The network device notifies, by using the first information, the first terminal of the modulation order set that includes modulation orders of all second terminals. The modulation order set may be used by the first terminal to receive the downlink data. In this case, although the first information occupies a small quantity of signaling resources, the size of the first information is still not small enough. To reduce signaling overheads, another modulation order set is further designed in this embodiment. The following describes a case in which the modulation order set includes the offset of the modulation order of the second terminal relative to the modulation order of the first terminal.

A data format of the first information may be set to a bit field. The first terminal may preset mapping information between different arrays in the bit field and different offsets. In this way, after receiving the first information, the first terminal may determine a corresponding offset based on the first information. The first terminal clearly knows the modulation order of the first terminal, and in this case, may determine all modulation orders of the second terminal based on the modulation order of the first terminal and the offset.

For example, the modulation order of the second terminal in Table 1 to Table 3 may be replaced with the offset, and the first information remains unchanged. The offset is the modulation order corresponding to the first terminal plus or minus a multiple of 2, for example, $Q+2$, $Q+4$, or $Q-2$, where $Q$ is the modulation order corresponding to the first terminal. The offset may also be represented as +2, +4, or -2. In comparison with the examples in Table 1 to Table 3 in which the modulation order set is directly set to the modulation order of the second terminal, a data amount of mapping information that the first terminal needs to store is reduced.

In another example, regardless of a communication scenario of an MCS table, the bit field of the first information may be set to 2 bits, and mapping information between different arrays in the bit field and different offsets may be shown in Table 4.

Table 4

| First information | Offset |
|---|---|
| 00 | No second terminal or {Q} |
| 01 | {Q, Q-2} |
| 10 | {Q, Q+2} |
| 11 | Others |

In this example, considering that, in the MU-MIMO communication scenario, a difference between the modulation order of the first terminal and the modulation order of the second terminal is 2 in most cases, only four types of first information are set. In a case in which the first information is 00, Q represents the modulation order of the first terminal, and indicates that modulation orders corresponding to all second terminals are the same as the modulation order of the first terminal or there is no second terminal. In this case, the first terminal may not need to perform detection on a modulation order needed for receiving the downlink data. This reduces power consumption of the first terminal. In a case in which the first information is 01 or 10, 01 indicates that the modulation order corresponding to the second terminal includes a modulation order that is two orders lower than the modulation order of the first terminal, and includes a modulation order that is the same as the modulation order of the first terminal; and 10 indicates that the modulation order corresponding to the second terminal includes a modulation order that is two orders higher than the modulation order of the first terminal, and includes a modulation order that is the same as the modulation order of the first terminal. Possibilities of a to-be-estimated parameter that need to be traversed are reduced to $2^{N_{Layer}}$ possibilities. In a case in which the first information is 11, after receiving the first information, the first terminal performs blind detection on the modulation order of the second terminal.

In this embodiment of this application, the modulation order set is set to including the offset of the modulation order of the second terminal relative to the modulation order of the first terminal. The modulation order set may be used by the first terminal to receive the downlink data, a size of the corresponding first information is only 2 bits, and signaling overheads are low.

The foregoing describes different implementations of the two modulation order sets when the modulation order information indicates the modulation order set of the second terminal. In this embodiment of this application, another implementation of the modulation order information is further designed. The following describes the another implementation of the modulation order information.

In an embodiment, there are a plurality of second terminals, and the modulation order information indicates whether second terminals corresponding to any same physical resource block invoked by the first terminal have a same modulation order.

In the MU-MIMO communication scenario, there are usually a plurality of physical resource blocks in a time-frequency resource scheduled by the first terminal, and physical resource blocks occupied by different second terminals may be the same or may be different. An mcs of one second terminal may include one or more modulation orders, and the plurality of modulation orders may be the same or may be different. For the physical resource block invoked by the first terminal, if all modulation orders corresponding to different second terminals are the same, it is considered that the second terminals corresponding to the physical resource block have the same modulation order. Otherwise, provided that a modulation order corresponding to any second terminal is different from a modulation order corresponding to another second terminal, it is considered that the second terminals corresponding to the physical resource block have different modulation orders.

For example, in a scenario in which there are a plurality of second terminals, it is assumed that there are four second terminals, including a second terminal A, a second terminal B, a second terminal C, and a second terminal D, the second terminal A and the second terminal B occupy a physical resource block 1, the second terminal C and the second terminal D occupy a physical resource block 2, the physical resource block 1 is different from the physical resource block 2, the second terminal A and the second terminal B have a same modulation order, and the second terminal C and the second terminal D also have a same modulation order. In this case, the modulation order information indicates that second terminals occupying a same physical resource block have a same modulation order. Correspondingly, the first information may be set to a 1-bit bit array 1.

For a scenario in which there is one second terminal or there is no second terminal, it is also considered that second terminals occupying a same physical resource block have a same modulation order, and the first information is also set to a 1-bit bit array 1.

In another example, there are four second terminals, including a second terminal A, a second terminal B, a second terminal C, and a second terminal D, the second terminal A and the second terminal B occupy a physical resource block 1, the second terminal C and the second terminal D occupy a physical resource block 2, the physical resource block 1 is different from the physical resource block 2, the second terminal A and the second terminal B have a same modulation order, and the second terminal C and the second terminal D have different modulation orders. In this case, the modulation order information indicates that second terminals occupying different physical resource blocks have different modulation orders (a determining rule is that if second terminals corresponding to at least one physical resource block have different modulation orders, the modulation order information indicates that the second terminals occupying different physical resource blocks have different modulation orders). Correspondingly, the first information may be set to a 1-bit bit array 0. The first terminal may preset mapping information between the first information and the modulation order information. In this way, after receiving the first information, the first terminal may determine, based on the first information, to receive the downlink data. In the foregoing two examples, the mapping information between the first information and the modulation order information may be shown in Table 5.

Table 5

| First information | Modulation order information |
|---|---|
| 1 | Second terminals corresponding to any same physical resource block invoked by a first terminal have a same modulation order or there is no second terminal |
| 0 | Second terminals corresponding to at least one same physical resource block invoked by a first terminal have different modulation orders |

As shown in Table 5, in a case in which the first information is 0, in comparison with estimating the modulation order through blind detection, parameters that need to be traversed are not reduced. It is assumed that, in a communication scenario, if all possible items of the modulation order include four types: 2, 4, 6, and 8. In this case, for a case in which the first information is 1, when the first terminal performs maximum likelihood estimation of the modulation order of the interference layer, in comparison with estimating the modulation order through blind detection, possibilities of a to-be-estimated parameter that need to be traversed are reduced from $4^{NLayer}$ possibilities to four possibilities. It is assumed that in another communication scenario, all possible items of the modulation order include five types: 2, 4, 6, 8, and 10. In this case, for a case in which the first information is 1, when the first terminal performs maximum likelihood estimation of the modulation order of the interference layer, in comparison with estimating the modulation order through blind detection, possibilities of a to-be-estimated parameter that need to be traversed are reduced from $5^{NLayer}$ possibilities to five possibilities.

In this embodiment of this application, the modulation order information is set to indicating whether second terminals occupying a same physical resource block have a same modulation order. The modulation order information may be used by the first terminal to receive the downlink data, a size of the corresponding first information is only 1 bit, and signaling overheads are low.

In an embodiment, the modulation order information indicates whether the second terminal and the first terminal have a same modulation order.

The first terminal may preset mapping information between the first information and the modulation order information. In this way, after receiving the first information, the first terminal may determine, based on the first information, to receive the downlink data. In this embodiment, there may be one or more second terminals. When there is one second terminal, if the second terminal and the first terminal have a same modulation order, the first information may be set to a 1-bit bit array 1. If the second terminal and the first terminal have different modulation orders, the first information may be set to a 1-bit bit array 0. When there are a plurality of second terminals, if all the second terminals and the first terminal have a same modulation order, the first information may be set to a 1-bit bit array 1. If at least one second terminal and the first terminal have different modulation orders, the first information may be set to a 1-bit bit array 0. In the foregoing two examples, the mapping information between the first information and the modulation order information may be shown in Table 6.

Table 6

| First information | Modulation order information |
|---|---|
| 1 | A second terminal and a first terminal have a same modulation order or there is no second terminal |
| 0 | A second terminal and a first terminal have different modulation orders |

As shown in Table 6, in a case in which the first information is 0, in comparison with estimating the modulation order through blind detection, parameters that need to be traversed are not reduced. However, in a case in which the first information is 1, because the first terminal clearly knows the modulation order of the first terminal, modulation order detection does not need to be performed.

In this embodiment of this application, the modulation order information is set to indicating whether the second terminal and the first terminal have a same modulation order. The modulation order information may be used by the first terminal to receive the downlink data, a size of the corresponding first information is only 1 bit, and signaling overheads are low.

In an embodiment, there are a plurality of second terminals. The modulation order information shown in Table 5 and Table 6 may be indicated together by using the first information. Correspondingly, the modulation order information indicates whether the second terminal and the first terminal have a same modulation order, and whether second terminals occupying a same physical resource block have a same modulation order.

The first terminal may preset mapping information between the first information and the modulation order information. In this way, after receiving the first information, the first terminal may determine, based on the first information, to receive the downlink data. For example, the mapping information in this embodiment may be shown in Table 7.

Table 7

| First information | Modulation order information |
|---|---|
| 00 | No second terminal |
| 01 | Second terminals and a first terminal have a same modulation order, and second terminals corresponding to any same physical resource block invoked by the first terminal have a same modulation order |
| 10 | Second terminals and a first terminal have different modulation orders, and second terminals corresponding to any same physical resource block invoked by the first terminal have a same modulation order |
| 11 | Second terminals and a first terminal have different modulation orders, and second terminals corresponding to any same physical resource block invoked by the first terminal have different modulation orders |

As shown in Table 7, in a case in which the first information is 11, in comparison with estimating the modulation order through blind detection, parameters that need to be traversed are not reduced. In a case in which the first information is 00, indicating that there is no second terminal, the first terminal may turn off a maximum likelihood receiver. This reduces power consumption of the first terminal caused by running of the maximum likelihood receiver. In a case in which the first information is 01, because the first terminal clearly knows the modulation order of the first terminal, modulation order detection does not need to be performed. In a case in which the first information is 10, when the first terminal performs maximum likelihood estimation of the modulation order of the interference layer, in comparison with estimating the modulation order through blind detection, possibilities of a to-be-estimated parameter that need to be traversed are reduced from $4^{N_{Layer}}$ possibilities to four possibilities.

In this embodiment of this application, the modulation order information is set to indicating whether the second terminal and the first terminal have a same modulation order, and whether second terminals occupying a same physical resource block have a same modulation order. The modulation order information may be used by the first terminal to receive the downlink data, a size of the corresponding first information is only 2 bits, and signaling overheads are low.

In an embodiment, the modulation order information may further indicate a highest-order modulation scheme in a modulation scheme corresponding to the second terminal.

The first terminal may preset mapping information between the first information and the modulation order information. In this way, after receiving the first information, the first terminal may determine, based on the first information, to receive the downlink data. For example, it is assumed that in a communication scenario, all possible items of the modulation order include four types: QPSK, 16QAM, 64QAM, and 256QAM. The mapping information in this embodiment may be shown in Table 8.

Table 8

| First information | Modulation order information |
|---|---|
| 00 | A highest-order modulation order corresponding to all second terminals is 2 or there is no second terminal |
| 01 | A highest-order modulation order corresponding to all second terminals is 4 |
| 10 | A highest-order modulation order corresponding to all second terminals is 6 |
| 11 | A highest-order modulation order corresponding to all second terminals is 8 |

As shown in Table 8, in a case in which the first information is 11, because the first information indicates a possible highest-order modulation order in the communication scenario, in comparison with estimating the modulation order through blind detection, parameters that need to be traversed are not reduced. In a case in which the first information is 00, indicating that the highest-order modulation order corresponding to all second terminals is 2 or there is no second terminal. In this case, the first terminal may not need to perform detection on a modulation order needed for receiving the downlink data. This reduces power consumption of the first terminal. In a case in which the first information is 01, detection is performed on all modulation orders only when the modulation order is not higher than an order of 4. In comparison with estimating the modulation order through blind detection, possibilities of a to-be-estimated parameter that need to be traversed are reduced from $4^{NLayer}$ possibilities to $2^{NLayer}$ possibilities. Similarly, in a case in which the first information is 10, detection is performed on all modulation orders only when the modulation order is not higher than an order of 6. In comparison with estimating the modulation order through blind detection, possibilities of a to-be-estimated parameter that need to be traversed are reduced from $4^{NLayer}$ possibilities to $3^{NLayer}$ possibilities.

In another communication scenario, all possible items of the modulation order include five types: 2, 4, 6, 8, and 10. In this case, in comparison with the mapping information shown in Table 7, the first information in this scenario may be set to 3 bits, to indicate a case in which a highest-order modulation order corresponding to all second terminals is 10. For a specific setting of each piece of first information and a function that can be implemented by corresponding modulation order information, refer to the descriptions in Table 7. Principles thereof are the same as those of Table 7 are the same, and details are not described again.

In this embodiment of this application, the modulation order information is set to indicating the highest-order modulation scheme in the modulation scheme corresponding to the second terminal. The modulation order information may be used by the first terminal to receive the downlink data, a size of the corresponding first information is only 2 bits, and signaling overheads are low.

In this embodiment of this application, the mapping information in Table 1 to the mapping information in Table 8 are examples of mapping information. During specific implementation, the mapping information may be information in some rows or information in all rows in the tables. This is not limited in this embodiment of this application.

The foregoing mainly describes the solutions provided in embodiments of this application from a perspective of interaction between nodes. It may be understood that, to implement the foregoing functions, each node, for example, a first terminal or a network device, includes a corresponding hardware structure and/or software module for performing each function. A person skilled in the art should easily be aware that, in combination with algorithm steps of the examples described in embodiments disclosed in this specification, the methods in embodiments of this application can be implemented by hardware, software, or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of the first terminal or the network device may be obtained through division based on the foregoing method examples. For example, each functional module may be obtained through division based on a corresponding function, or two or more functions may be integrated into one processing module. The integrated module may be implemented in a form of hardware, or may be implemented in a form of a software functional module. It should be noted that, in embodiments of this application, module division is an example, and is merely logical function division. During actual implementation, another division manner may be used.

During specific implementation, the network elements shown in this application, for example, the first terminal or the network device, may use a composition structure shown in FIG. 6 or include components shown in FIG. 6. FIG. 6 is a diagram 1 of a structure of a communication apparatus according to an embodiment of this application. When the communication apparatus has a function of the first terminal in embodiments of this application, the communication apparatus may be the first terminal, or a chip or a system on chip in the first terminal. When the communication apparatus has a function of the network device in embodiments of this application, the communication apparatus may be the network device, or a chip or a system on chip in the network device.

As shown in FIG. 6, the communication apparatus 600 may include a processor 601, a communication line 602, a transceiver 603, and a memory 604. The processor 601, the memory 604, and the transceiver 603 may be connected to each other through the communication line 602. In an example, the processor 601 may include one or more CPUs, for example, a CPU 0 and a CPU 1 in FIG. 6.

In an optional implementation, the communication apparatus 600 includes a plurality of processors. For example, in addition to the processor 601 in FIG. 6, the communication apparatus 600 may further include a processor 607.

The processor 601 may be a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. The processor 601 may alternatively be another apparatus having a processing function, for example, a circuit, a component, or a software module.

The communication line 602 is configured to transmit information between components included in the communication apparatus 600.

The transceiver 603 is configured to communicate with another device or another communication network. The another communication network may be an Ethernet, a radio access network (radio access network, RAN), a wireless local area network (wireless local area network, WLAN), or the like. The transceiver 603 may be an interface circuit, a pin, a radio frequency module, a transceiver, or any apparatus that can implement communication.

Further, the communication apparatus 600 may include the memory 604. The memory 604 is configured to store instructions. The instructions may be a computer program.

The memory 604 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another optical disk storage, an optical disc storage, or a magnetic disk storage medium or another magnetic storage device. The optical disc storage includes a compressed optical disc, a laser disc, an optical disc, a digital versatile disc, a Blu-ray disc, or the like.

It should be noted that, the memory 604 may exist independently of the processor 601, or may be integrated with the processor 601. The memory 604 may be configured to store instructions, program code, some data, or the like. The memory 604 may be located in the communication apparatus 600, or may be located outside the communication apparatus 600. This is not limited. When executing the instructions stored in the memory 604, the processor 601 may implement the methods provided in embodiments of this application.

In an optional implementation, the communication apparatus 600 further includes an output device 605 and an input device 606. For example, the input device 606 is a device such as a keyboard, a mouse, a microphone, or a joystick, and the output device 605 is a device such as a display screen or a speaker (speaker).

It should be noted that the communication apparatus 600 may be a desktop computer, a portable computer, a network server, a mobile phone, a tablet computer, a wireless terminal, an embedded device, a chip system, or a device having a structure similar to that in FIG. 6. In addition, the composition structure shown in FIG. 6 does not constitute a limitation on the communication apparatus. In addition to the components shown in FIG. 6, the communication apparatus may include more or fewer components than those shown in the figure, or combine some components, or have different component arrangements.

In this embodiment of this application, the chip system may include a chip, or may include a chip and another discrete component.

FIG. 7 is a diagram 2 of a structure of a communication apparatus. The communication apparatus is used in a first terminal. Modules in the apparatus shown in FIG. 7 have functions of implementing corresponding steps in FIG. 4 and FIG. 5, and can achieve corresponding technical effects thereof. For beneficial effects corresponding to the steps performed by the modules, refer to the descriptions of the corresponding steps in FIG. 4 and FIG. 5. Details are not described again. The functions may be implemented by hardware, or may be implemented by hardware executing corresponding software. The hardware or the software includes one or more modules corresponding to the functions. The communication apparatus may be the first terminal, or a chip or a system on chip in the first terminal. For example, the communication apparatus includes:

a transceiver module 710, used by the first terminal to receive first information from a network device, where the first information indicates modulation order information for data transmission of a second terminal; and

a processing module 720, used by the first terminal to receive downlink data based on the modulation order information for the data transmission of the second terminal.

In an embodiment, the quantity of the second terminal is one or more, and the modulation order information indicates a modulation order set of the second terminal.

In an embodiment, the modulation order set includes a modulation order of the second terminal, or the modulation order set includes an offset of a modulation order of the second terminal relative to a modulation order of the first terminal.

In an embodiment, the modulation order information indicates whether second terminals corresponding to any same physical resource block invoked by the first terminal have a same modulation order, where there are a plurality of second terminals. Alternatively, the modulation order information indicates whether the second terminal and the first terminal have a same modulation order. Alternatively, the modulation order information indicates whether the second terminal and the first terminal have a same modulation order, and whether second terminals occupying a same physical resource block have a same modulation order, where there are a plurality of second terminals. Alternatively, the modulation order information indicates a highest-order modulation scheme in a modulation scheme corresponding to the second terminal.

In an embodiment, the first terminal and the second terminal occupy a same time-frequency domain resource.

In an embodiment, the first information is carried in downlink control information DCI, the first information is carried in radio resource control protocol RRC signaling, or the first information is carried in medium access control control element MAC-CE signaling.

In an embodiment, the first information is carried in the DCI, and before receiving the first information from the network device, the transceiver module 710 is further used by the first terminal to receive second information from the network device, where the second information indicates that the network device has sent the first information.

In an embodiment, the second information is carried in RRC signaling, or the second information is carried in MAC-CE signaling.

In an embodiment, the first information includes identification information, and different identification information corresponds to different modulation order information.

An embodiment of this application further provides a communication apparatus. The communication apparatus is used in a network device. Modules in the communication apparatus have functions of implementing corresponding steps in FIG. 5 and FIG. 6, and can achieve corresponding technical effects thereof. For beneficial effects corresponding to the steps performed by the modules, refer to the descriptions of the corresponding steps in FIG. 5 and FIG. 6. Details are not described again. The functions may be implemented by hardware, or may be implemented by hardware executing corresponding software. The hardware or the software includes one or more modules corresponding to the functions. The communication apparatus may be the network device, or a chip or a system on chip in the network device. For example, the communication apparatus includes:

a transceiver module, used by the network device to send first information to a first terminal, where the first information indicates modulation order information for data transmission of a second terminal.

In an embodiment, the quantity of the second terminal is one or more, and the modulation order information indicates a modulation order set of the second terminal.

In an embodiment, the modulation order set includes a modulation order of the second terminal, or the modulation order set includes an offset of a modulation order of the second terminal relative to a modulation order of the first terminal.

In an embodiment, the modulation order information indicates whether second terminals corresponding to any same physical resource block invoked by the first terminal have a same modulation order, where there are a plurality of second terminals. Alternatively, the modulation order information indicates whether the second terminal and the first terminal have a same modulation order. Alternatively, the modulation order information indicates whether the second terminal and the first terminal have a same modulation order, and whether second terminals occupying a same physical resource block have a same modulation order, where there are a plurality of second terminals. Alternatively, the modulation order information indicates a highest-order modulation scheme in a modulation scheme corresponding to the second terminal.

In an embodiment, the first terminal and the second terminal occupy a same time-frequency domain resource.

In an embodiment, the first information is carried in downlink control information DCI, the first information is carried in radio resource control protocol RRC signaling, or the first information is carried in medium access control control element MAC-CE signaling.

In an embodiment, the first information is carried in the DCI, and before receiving the first information from the network device, the transceiver module is further configured to:

receive second information from the network device, where the second information indicates that the network device has sent the first information.

In an embodiment, the second information is carried in RRC signaling, or the second information is carried in MAC-CE signaling.

In an embodiment, the first information includes identification information, and different identification information corresponds to different modulation order information.

FIG. 8 is a diagram 2 of a structure of a communication system according to an embodiment of this application. The communication system is a communication system corresponding to a MU-MIMO scenario. As shown in FIG. 8, the communication system may include a network device 810 and a first terminal 820. The network device 810 may have a function of a communication apparatus used in the network device in embodiments of this application, and the first terminal 820 may have a function of the communication apparatus shown in FIG. 7.

An embodiment of this application further provides a computer-readable storage medium. All or some of procedures in the foregoing method embodiments may be implemented by a computer program instructing related hardware. The program may be stored in the foregoing computer-readable storage medium. When the program is executed, the procedures in the foregoing method embodiments may be included. The computer-readable storage medium may be an internal storage unit of the terminal apparatus in any one of the foregoing embodiments, for example, including a data transmit end and/or a data receive end. For example, the computer-readable storage medium may be a hard disk drive or a memory of the terminal apparatus. The computer-readable storage medium may alternatively be an external storage device of the terminal apparatus, for example, a plug-in hard disk drive, a smart media card (smart media card, SMC), a secure digital (secure digital, SD) card, or a flash card (flash card) that is configured on the terminal apparatus. Further, the computer-readable storage medium may include both an internal storage unit and an external storage device of the terminal apparatus. The computer-readable storage medium is configured to store the computer program and other programs and data that are needed by the terminal apparatus. The computer-readable storage medium may be further configured to temporarily store data that has been output or is to be output.

An embodiment of this application further provides computer instructions. All or some of procedures in the foregoing method embodiments may be implemented by the computer instructions instructing related hardware (for example, a computer, a processor, a network device, and a terminal). The program may be stored in the computer-readable storage medium.

An embodiment of this application further provides a chip system. The chip system may include a chip, or may include a chip and another discrete component. This is not limited. The chip system includes a processor and a transceiver. All or some of procedures in the foregoing method embodiments may be implemented by the chip system. For example, the chip system may be configured to: implement a function performed by the first terminal in the foregoing method embodiments, or implement a function performed by the network device in the foregoing method embodiments.

In a possible design, the chip system further includes a memory. The memory is configured to store program instructions and/or data. When the chip system runs, the processor executes the program instructions stored in the memory, to enable the chip system to perform the function performed by the first terminal in the foregoing method embodiments or perform the function performed by the network device in the foregoing method embodiments.

In this embodiment of this application, the processor may be a general-purpose processor, a digital signal processor, an application-specific integrated circuit, a field programmable gate array or another programmable logic device, a discrete gate or a transistor logic device, or a discrete hardware component, and may implement or perform the methods, steps, and logical block diagrams disclosed in embodiments of this application. The general-purpose processor may be a microprocessor or any conventional processor or the like. The steps of the methods disclosed with reference to embodiments of this application may be directly performed and implemented by a hardware processor, or may be performed and implemented by a combination of hardware and a software module in the processor.

In this embodiment of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of instructions or a data structure and that can be accessed by a computer, but is not limited thereto. The memory in this embodiment of this application may alternatively be a circuit or any other apparatus that can implement a storage function, and is configured to store instructions and/or data.

It should be noted that, in the specification, claims, and accompanying drawings of this application, the terms "first", "second", and the like are intended to distinguish between different objects but are not used to describe a particular order. In addition, the terms "including" and "having" and any variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, method, product, or device.

It should be understood that, in embodiments of this application, "at least one (item)" means one or more, "plurality of" means two or more, "at least two (items)" means two, three, or more, and "and/or" is used to describe an association relationship between associated objects and indicates that three relationships may exist. For example, "A and/or B" may indicate the following three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including a singular item (piece) or any combination of plural items (pieces). For example, at least one item (piece) of a, b, or c may indicate a, b, c, "a and b", "a and c", "b and c", or "a, b, and c", where a, b, and c may be singular or plural. It should be understood that in embodiments of this application, "B corresponding to A" indicates that B is associated with A. For example, B may be determined based on A. It should be further understood that determining B based on A does not mean that B is determined based only on A. B may alternatively be determined based on A and/or other information. In addition, "connection" in embodiments of this application means various connection manners such as a direct connection or an indirect connection, for implementing communication between devices. This is not limited in embodiments of this application.

Unless otherwise specified, "transmission" (transmit/transmission) in embodiments of this application means bidirectional transmission, and includes a sending action and/or a receiving action. Specifically, "transmission" in embodiments of this application includes data sending, data receiving, or data sending and data receiving. That is, data transmission herein includes uplink data transmission and/or downlink data transmission. Data may include a channel and/or a signal. The uplink data transmission is uplink channel transmission and/or uplink signal transmission, and the downlink data transmission is downlink channel transmission and/or downlink signal transmission. In embodiments of this application, a "network" and a "system" express a same concept, and a communication system is a communications network.

Based on the foregoing descriptions of the implementations, a person skilled in the art may clearly understand that, for the purpose of convenient and brief description, division into the foregoing functional modules is merely used as an example for illustration. During actual application, the foregoing functions can be allocated to different functional modules for implementation based on a requirement, in other words, an inner structure of an apparatus is divided into different functional modules to implement all or some of the functions described above.

In several embodiments provided in this application, it should be understood that the disclosed apparatuses and methods may be implemented in other manners. For example, the described apparatus embodiments are merely examples. For example, the division into modules or units is merely logical function division and there may be another division manner during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may be or may not be physically separate, and parts displayed as units may be one or more physical units, may be located in one place, or may be distributed on different places. Some or all of the units may be selected based on an actual requirement to achieve the objectives of the solutions of embodiments.

In addition, functional units in embodiments of this application may be integrated into one processing unit, or each unit may exist alone physically, or two or more units may be integrated into one unit. The integrated unit may be implemented in a form of hardware, or may be implemented in a form of a software functional unit. When the integrated unit is implemented in the form of a software functional unit and sold or used as an independent product, the integrated unit may be stored in a readable storage medium. Based on such an understanding, the technical solutions in embodiments of this application essentially, or some of the technical solutions that contribute to the conventional technology, or all or some of the technical solutions may be embodied in a form of a software product. The software product is stored in a storage medium, and includes several instructions used to enable a device, for example, a single-chip microcomputer, a chip, or a processor (processor) to perform all or some of the steps of the methods in embodiments of this application. The foregoing storage medium includes any medium that can store program code, for example, a USB flash drive, a removable hard disk drive, a ROM, a RAM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1.  A communication method, wherein the method comprises:

    receiving, by a first terminal, first information from a network device, wherein the first information indicates modulation order information for data transmission of a second terminal; and
    receiving downlink data based on the modulation order information for the data transmission of the second terminal.

2.  The communication method according to claim 1, wherein the quantity of the second terminal is one or more, and the modulation order information indicates a modulation order set of the second terminal.

3.  The communication method according to claim 2, wherein the modulation order set comprises a modulation order of the second terminal, or the modulation order set comprises an offset of a modulation order of the second terminal relative to a modulation order of the first terminal.

4.  The communication method according to claim 1, wherein the modulation order information indicates whether the second terminal and the first terminal have a same modulation order;

    the modulation order information indicates whether the second terminal and the first terminal have a same modulation order, and whether second terminals occupying a same physical resource block have a same modulation order, wherein there are a plurality of second terminals; or
    the modulation order information indicates a highest-order modulation scheme in modulation scheme corresponding to the second terminal.

5.  The communication method according to claim 1, wherein there are a plurality of second terminals;

    the modulation order information indicates that second terminals corresponding to any same physical resource block invoked by the first terminal have a same modulation order;
    the modulation order information indicates that second terminals corresponding to at least one same physical resource block invoked by the first terminal have different modulation orders; or
    the modulation order information indicates that there is no second terminal corresponding to any same physical resource block invoked by the first terminal.

6. The communication method according to any one of claims 1 to 5, wherein the first terminal and the second terminal multiplex a time-frequency resource in a space division manner.

7. The communication method according to any one of claims 1 to 6, wherein the first information is carried in downlink control information DCI, the first information is carried in radio resource control protocol RRC signaling, or the first information is carried in medium access control control element MAC-CE signaling.

8. The communication method according to claim 7, wherein the first information is carried in the DCI, and before receiving the first information from the network device, the method further comprises:
receiving second information from the network device, wherein the second information indicates that the network device has sent the first information.

9. The communication method according to claim 8, wherein the second information is carried in RRC signaling, or the second information is carried in MAC-CE signaling.

10. The communication method according to any one of claims 1 to 9, wherein the first information comprises identification information, and different identification information corresponds to different modulation order information.

11. The communication method according to any one of claims 1 to 10, wherein pilot sequences for sending data to the first terminal and the second terminal by the network device are orthogonal.

12. A communication method, wherein the method comprises:
sending, by a network device, first information to a first terminal, wherein the first information indicates modulation order information for data transmission of a second terminal.

13. The communication method according to claim 12, wherein the quantity of the second terminal is one or more, and the modulation order information indicates a modulation order set of the second terminal.

14. The communication method according to claim 13, wherein the modulation order set comprises a modulation order of the second terminal, or the modulation order set comprises an offset of a modulation order of the second terminal relative to a modulation order of the first terminal.

15. The communication method according to claim 12, wherein the modulation order information indicates whether the second terminal and the first terminal have a same modulation order;

the modulation order information indicates whether the second terminal and the first terminal have a same modulation order, and whether second terminals occupying a same physical resource block have a same modulation order, wherein there are a plurality of second terminals; or
the modulation order information indicates a highest-order modulation scheme in the modulation scheme corresponding to the second terminal.

16. The communication method according to claim 12, wherein there are a plurality of second terminals;

the modulation order information indicates that second terminals corresponding to any same physical resource block invoked by the first terminal have a same modulation order;
the modulation order information indicates that second terminals corresponding to at least one same physical resource block invoked by the first terminal have different modulation orders; or
the modulation order information indicates that there is no second terminal corresponding to any same physical resource block invoked by the first terminal.

17. The communication method according to any one of claims 12 to 16, wherein the first terminal and the second terminal multiplex a time-frequency resource in a space division manner.

18. The communication method according to any one of claims 12 to 17, wherein the first information is carried in downlink control information DCI, the first information is carried in radio resource control protocol RRC signaling, or the first information is carried in medium access control control element MAC-CE signaling.

19. The communication method according to claim 18, wherein the first information is carried in the DCI, and before sending, by the network device, the first information to the first terminal, the method further comprises:
sending, by the network device, second information to the first terminal, wherein the second information indicates that the network device has sent the first information.

20. The communication method according to claim 19, wherein the second information is carried in RRC signaling, or the second information is carried in MAC-CE signaling.

21. The communication method according to any one of claims 12 to 20, wherein the first information comprises identification information, and different identification information corresponds to different modulation order information.

22. The communication method according to any one of claims 12 to 21, wherein pilot sequences for sending data to the first terminal and the second terminal by the network device are orthogonal.

23. A communication apparatus, wherein the apparatus comprises:

a transceiver module, used by a first terminal to receive first information from a network device, wherein the first information indicates modulation order information for data transmission of a second terminal; and
a processing module, used by the first terminal to receive downlink data based on the modulation order information for the data transmission of the second terminal.

24. A communication apparatus, wherein the apparatus comprises:
a transceiver module, used by a network device to send first information to a first terminal, wherein the first information indicates modulation order information for data transmission of a second terminal.

25. A communication apparatus, wherein the communication apparatus comprises a processor and a transceiver, and the processor and the transceiver are configured to support the communication apparatus in performing the method according to any one of claims 1 to 22.

26. A computer-readable storage medium, wherein the computer-readable storage medium stores computer instructions, and when the computer instructions are run, the method according to any one of claims 1 to 22 is performed.

27. A communication system, wherein the communication system comprises a network device and a first terminal, wherein

the network device is configured to send first information to the first terminal, wherein the first information indicates modulation order information for data transmission of a second terminal;
the first terminal is configured to receive the first information from the network device; and
the first terminal is further configured to receive downlink data based on the modulation order information for the data transmission of the second terminal.

FIG. 1

FIG. 2

Network device

Terminal 1    Terminal 2    Terminal 3

FIG. 3

| First terminal | | Network device |
|---|---|---|

S410: First information

S420: The first terminal receives downlink data based on modulation order information for data transmission of a second terminal

FIG. 4

First terminal

Network device

S510: Second information

S410: First information

S420: The first terminal receives downlink data based on modulation order information for data transmission of a second terminal

FIG. 5

607

601

Processor

CPU 0

CPU 1

Processor

CPU 0

CPU 1

604

Communication line 602

Memory

606

605

603

Input device

Output device

Transceiver

FIG. 6

Transceiver module 710

Processing module 720

FIG. 7

Network device 810

First terminal 820

FIG. 8

## INTERNATIONAL SEARCH REPORT

| International application No. |
| --- |
| **PCT/CN2024/075288** |

| A. | CLASSIFICATION OF SUBJECT MATTER |
| --- | --- |
| | H04B7/0452(2017.01)i |

According to International Patent Classification (IPC) or to both national classification and IPC

| B. | FIELDS SEARCHED |
| --- | --- |

Minimum documentation searched (classification system followed by classification symbols)

IPC: H04B H04W H04Q

Documentation searched other than minimum documentation to the extent that such documents are included in the fields searched

Electronic data base consulted during the international search (name of data base and, where practicable, search terms used)

CNTXT, ENTXTC, WPABS, VEN, ENTXT, CNKI, 3GPP: 最大似然, 第二, 另一, 其他, 其它, 配对, 终端, 调制, 阶数, 下行, 干扰, 层, ML, second, other, another, pairing, UE, terminal, modulat+, order

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | US 2019098610 A1 (LG ELECTRONICS INC.) 28 March 2019 (2019-03-28) claims 1-12, and description, paragraphs [0026]-[0143] | 1-27 |
| X | CN 109478986 A (INTEL IP CORP.) 15 March 2019 (2019-03-15) claims 1-25, and description, paragraphs [0031]-[0282] | 1-27 |
| X | US 2020245300 A1 (LG ELECTRONICS INC.) 30 July 2020 (2020-07-30) claims 15-24, and description, paragraphs [0030]-[0173] | 1-27 |
| A | NTT DOCOMO, INC. et al. "Text Proposal for Annex A.3 of TR 36.859" *3GPP TSG RAN WG1 Meeting #82, R1-154928*, 28 August 2015 (2015-08-28), entire document | 1-27 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **08 April 2024** | **12 April 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/075288**

| Patent document cited in search report | | | Publication date (day/month/year) | Patent family member(s) | | | Publication date (day/month/year) |
|---|---|---|---|---|---|---|---|
| US | 2019098610 | A1 | 28 March 2019 | WO | 2017196155 | A2 | 16 November 2017 |
| | | | | EP | 3457597 | A2 | 20 March 2019 |
| CN | 109478986 | A | 15 March 2019 | WO | 2018039212 | A1 | 01 March 2018 |
| US | 2020245300 | A1 | 30 July 2020 | WO | 2017074014 | A1 | 04 May 2017 |
| | | | | CN | 108352888 | A | 31 July 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310182963